# FASCICULE DE BREVET EUROPEEN

(11) **EP 2 721 666 B1**
(45) Date de publication et mention de la délivrance du brevet: **16.09.2015**
(21) Numéro de dépôt: 12730829.4
(22) Date de dépôt: 12.06.2012
(51) Int. Cl.: B60L 3/00, B60L 3/04, B60L 11/18, H02J 7/36, H01M 2/20

(54) **ELEMENT DE BATTERIE SECURISE**
SICHERES BATTERIEELEMENT
SECURE BATTERY ELEMENT

(30) Priorité: 17.06.2011 FR 1155349
(43) Date de publication de la demande: 23.04.2014
(73) Titulaire: Commissariat à l'Énergie Atomique et aux Énergies Alternatives, 75015 Paris (FR)
(72) Inventeur: CHATROUX, Daniel, F-38470 Teche (FR); DUPONT, Jeremy, F-38300 Bourgoin-Jallieu (FR); CARCOUET, Sébastien, F-38450 Vif (FR)
(74) Mandataire: Colombo, Michel
(86) Numéro de dépôt international: PCT/EP2012/061116
(87) Numéro de publication internationale: WO 2012/171917

(56) Documents cités:
- EP-A1- 2 284 941
- WO-A1-2008/066253
- DE-A1-102008 010 971
- JP-A- 2008 206 288
- US-A1- 2010 109 437
- US-A1- 2010 116 570

## Description

L'invention concerne les batteries d'accumulateurs électrochimiques. Celles-ci peuvent par exemple être utilisées dans le domaine des transports électriques et hybrides ou les systèmes embarqués.

Un accumulateur électrochimique a habituellement une tension nominale de l'ordre de grandeur suivant :
1.2 V pour des batteries de type NiMH,
3.3 V pour une technologie lithium-ion phosphate de Fer, LiFePO4,
4.2 V pour une technologie de type lithium-ion à base d'oxyde de cobalt.

Ces tensions nominales sont trop faibles par rapport aux exigences de la plupart des systèmes à alimenter. Pour obtenir le niveau de tension adéquat, on place en série plusieurs accumulateurs. Pour obtenir de fortes puissances et capacités, on place plusieurs accumulateurs en parallèle. Le nombre d'étages (nombre d'accumulateurs en série) et le nombre d'accumulateurs en parallèle dans chaque étage varient en fonction de la tension, du courant et de la capacité souhaités pour la batterie. L'association de plusieurs accumulateurs est appelée une batterie d'accumulateurs.

De telles batteries sont par exemple utilisées dans des véhicules pour entraîner un moteur électrique à courant alternatif par l'intermédiaire d'un onduleur. De telles batteries comportent également une forte capacité afin de favoriser l'autonomie du véhicule en mode électrique. Typiquement, un véhicule électrique utilise une batterie d'accumulateurs dont la tension nominale est de l'ordre de 400V, avec un courant crête de 200A et une capacité de 20kWh.

Les accumulateurs électrochimiques utilisés pour de tels véhicules sont généralement du type lithium ion pour leur capacité à stocker une énergie importante avec un poids et un volume contenus. Les technologies de batterie de type Lithium ion phosphate de fer LiFePO4 font l'objet d'importants développements du fait d'un niveau de sécurité intrinsèque élevé, au détriment d'une densité de stockage d'énergie un peu en retrait.

Il s'avère parfois nécessaire de séparer la batterie du véhicule, par exemple pour procéder à des opérations de maintenance. Pour cela, le véhicule est muni d'un circuit de sectionnement comprenant des commutateurs aptes à couper le courant continu sous pleine tension, par exemple des contacteurs sous vide. Le circuit de sectionnement est généralement externe à la batterie et conçu pour que l'état de sectionnement entre la batterie et le bus haute tension du véhicule soit contrôlable visuellement. Les bornes de la batterie sont alors accessibles pour les opérateurs. Lorsque le circuit de sectionnement est intégré à l'intérieur de la batterie, celle-ci comporte généralement également des bornes additionnelles destinées à alimenter certains périphériques et qui restent donc accessibles par les opérateurs.

Cependant, même lorsque le circuit de sectionnement ouvre la connexion entre la batterie et le bus haute tension du véhicule, l'intégralité de la tension de la batterie reste appliquée à ses bornes. Par conséquent, même au repos durant une intervention de maintenance, la batterie présente des risques d'électrocution pour les opérateurs.

Par ailleurs de l'eau peut s'infiltrer dans le véhicule jusqu'aux batteries. Les bornes peuvent se retrouver plongées dans de l'eau et lui appliquer la tension aux bornes de la batterie. Cela induit des risques d'électrocution, ou d'hydrolyse de l'eau avec un dégagement d'hydrogène et ainsi un risque d'explosion. Du fait des besoins en refroidissement de la batterie, celle-ci ne peut pas être logée de façon aussi hermétique que souhaité pour surmonter ce risque.

Par ailleurs, les batteries nécessitent généralement d'être mises hors service dès que possible lors de la défaillance d'un accumulateur. En effet, la tension alternative générée par l'onduleur est fonction de la tension continue que lui applique la batterie. Par conséquent, une baisse subite de la tension de la batterie peut induire des problèmes de fonctionnement dans le moteur électrique. Le véhicule doit alors être immobilisé et il faut isoler la batterie du bus haute tension au moyen du circuit de sectionnement.

Une solution connue pour certains véhicules hybrides électriques/thermiques permet de résoudre le problème de la variation de tension appliquée sur l'onduleur en cas de défaillance d'un accumulateur. Une telle solution comprend un convertisseur disposé entre la batterie et l'onduleur. Le convertisseur est élévateur de tension lorsque la batterie alimente l'onduleur moteur et est abaisseur durant les phases de récupération d'énergie lorsque l'onduleur moteur recharge la batterie. Comme un tel convertisseur ne fonctionne que très brièvement dans un véhicule hybride, sa taille, le dimensionnement de son système de refroidissement et son coût peuvent être minimisés.

Cependant, pour un véhicule à motorisation uniquement électrique, ce convertisseur est amené à fonctionner avec un rapport cyclique bien plus élevé, ce qui induit une taille, un dimensionnement du système de refroidissement et un coût handicapants. JP 2008206288 et EP2284941 décrivent un système de déconnexion d'une batterie d'accumulateurs.

L'invention vise à résoudre un ou plusieurs de ces inconvénients. L'invention porte ainsi sur un élément de batterie, comprenant :
- plusieurs accumulateurs électrochimiques appliquant une différence de potentiel entre des premier et deuxième pôles ;
- deux bornes de sortie de puissance ;
- un dispositif de sécurisation comprenant des premier et deuxième interrupteurs connectés en série entre les premier et deuxième pôles, le premier interrupteur étant un interrupteur normalement fermé et le deuxième interrupteur étant un interrupteur normalement ouvert, l'interrupteur normalement ouvert étant configuré pour isoler/connecter sélectivement le premier pôle et la première borne, l'interrupteur normalement fermé étant configuré pour isoler/connecter sélectivement les première et deuxième bornes, le signal de commande de l'interrupteur normalement fermé étant une tension appliquée par lesdits accumulateurs électrochimiques.

Selon une variante, l'élément comprend un circuit de commande configuré pour maintenir simultanément ouvert l'interrupteur normalement fermé, et fermé l'interrupteur normalement ouvert.

Selon encore une variante, lesdits interrupteurs normalement ouvert et normalement fermé incluent des transistors de type MOSFET, la grille du transistor de l'interrupteur normalement fermé étant connectée à la tension d'un desdits accumulateurs électrochimiques supérieure à la tension du deuxième pôle, et la source du transistor de l'interrupteur normalement fermé étant connectée au deuxième pôle.

Selon une autre variante, la grille du transistor MOSFET de l'interrupteur normalement fermé est connectée à un accumulateur électrochimique par l'intermédiaire d'une résistance, et l'interrupteur normalement fermé incluant un interrupteur commandé par le circuit de commande et connecté entre la grille du transistor MOSFET de l'interrupteur normalement fermé et le deuxième pôle.

Selon encore une autre variante, ladite résistance connecte la grille du transistor MOSFET de l'interrupteur normalement fermé à un noeud de connexion entre deux desdits accumulateurs connectés en série.

Selon une variante, l'élément comprend un fusible dont la valeur l²t est inférieure à la valeur l²t des liaisons internes du transistor MOSFET de l'interrupteur normalement fermé.

Selon une autre variante, le dispositif de sécurisation comprend des troisième et quatrième interrupteurs connectés en série entre les premier et deuxième pôles, le troisième interrupteur étant un interrupteur normalement fermé et le quatrième interrupteur étant un interrupteur normalement ouvert, le quatrième interrupteur étant configuré pour isoler/connecter sélectivement le premier pôle et la première borne, le troisième interrupteur étant configuré pour isoler/connecter sélectivement les première et deuxième bornes, le signal de commande du troisième interrupteur étant une tension appliquée par lesdits accumulateurs électrochimiques.

Selon encore une variante, lesdits troisième et quatrième interrupteurs incluent des transistors de type MOSFET, la grille du troisième transistor étant connectée à la tension d'un desdits accumulateurs électrochimiques supérieure à la tension du deuxième pôle, et la source du quatrième transistor étant connectée au deuxième pôle.

Selon encore une autre variante, la fermeture d'un même interrupteur induit l'ouverture desdits transistors de l'interrupteur normalement fermé.

Selon une variante, le dispositif de sécurisation comprend un circuit de détection de détérioration d'un desdits transistors des interrupteurs normalement fermés, le circuit de détection comprenant :
- une résistance connectée entre le premier pôle et un noeud de détection ;
- une première diode dont l'anode est connectée audit noeud de détection et dont la cathode est connectée à la grille du transistor du premier interrupteur ;
- une deuxième diode dont l'anode est connectée audit noeud de détection et dont la cathode est connectée à la grille du troisième transistor ;
- un circuit de mesure de la tension du noeud de détection.

L'invention porte également sur une batterie comprenant plusieurs éléments de batterie tels que décrits ci-dessus et connectés en série, la somme des tensions nominales desdits éléments de batterie étant supérieure à 100V.

Selon une variante, le circuit de commande est configuré pour maintenir simultanément ouvert l'interrupteur normalement fermé de chaque élément de batterie, et fermé l'interrupteur normalement ouvert de chaque élément de batterie.

Selon encore une variante, le circuit de commande est configuré pour activer séquentiellement l'application de la tension nominale de plusieurs éléments de batterie à leurs bornes de sortie de puissance.

Selon une autre variante, le circuit de commande est configuré pour :
- détecter qu'un élément de batterie a atteint une limite de charge ;
- maintenir simultanément fermé l'interrupteur normalement fermé et ouvert l'interrupteur normalement ouvert de l'élément de batterie détecté ;
- maintenir simultanément ouvert l'interrupteur normalement fermé et fermé l'interrupteur normalement ouvert d'un autre élément de batterie.

L'invention porte en outre sur un véhicule automobile comprenant :
- un moteur électrique;
- une batterie telle que décrite ci-dessus alimentant le moteur électrique.

D'autres caractéristiques et avantages de l'invention ressortiront clairement de la description qui en est faite ci-après, à titre indicatif et nullement limitatif, en référence aux dessins annexés, dans lesquels :
- la figure 1 est une représentation schématique d'un véhicule comportant une batterie munie d'un dispositif de sécurisation selon l'invention ;
- la figure 2 est un schéma électrique d'un dispositif de sécurisation selon un premier mode de réalisation, accolé à un élément de la batterie ;
- la figure 3 illustre la configuration de connexion de la batterie lorsque le véhicule est à l'arrêt ;
- la figure 4 illustre la configuration de connexion de la batterie lorsque le véhicule est en fonctionnement ;
- la figure 5 illustre la configuration de connexion de la batterie dans un exemple de dysfonctionnement avec action d'un dispositif de sécurisation ;
- la figure 6 est un schéma électrique d'un dispositif de sécurisation selon un second mode de réalisation, accolé à un élément de la batterie ;
- la figure 7 est un schéma électrique d'un dispositif de sécurisation selon une première variante d'un troisième mode de réalisation ;
- la figure 8 est un schéma électrique d'un dispositif de sécurisation selon une deuxième variante d'un troisième mode de réalisation ;
- la figure 9 est un schéma électrique d'un quatrième mode de réalisation intégrant un circuit de détection de défaillance ;
- la figure 10 illustre une configuration de connexion de plusieurs dispositifs de sécurisation durant une précharge d'une capacité de découplage.

L'invention propose un élément de batterie sécurisé. L'élément comprend plusieurs accumulateurs électrochimiques appliquant une différence de potentiel entre des premier et deuxième pôles, et deux bornes de sortie de puissance.

L'élément comprend également un dispositif de sécurisation muni de premier et deuxième interrupteurs connectés en série entre les premier et deuxième pôles. Le premier interrupteur est un interrupteur normalement fermé et le deuxième interrupteur est un interrupteur normalement ouvert. L'interrupteur normalement ouvert étant configuré pour isoler/connecter sélectivement le premier pôle et la première borne, l'interrupteur normalement fermé étant configuré pour isoler/connecter sélectivement les première et deuxième bornes, le signal de commande de l'interrupteur normalement fermé étant une tension appliquée par lesdits accumulateurs électrochimiques.

Un interrupteur normalement ouvert forme un contact à l'état ouvert par défaut, et un interrupteur normalement fermé forme un contact à l'état fermé par défaut, selon la définition fournie à l'adresse http://fr.wikipedia.org/wiki/Contact électrique.

L'invention permet d'assurer la sécurité d'un manipulateur lorsque la batterie n'est pas encore en utilisation, par exemple pour réaliser des opérations de maintenance ou de recyclage du véhicule. L'invention permet également d'éviter la création d'un arc électrique entre les bornes de la batterie ou d'un élément du fait d'une erreur de manipulation durant son stockage.

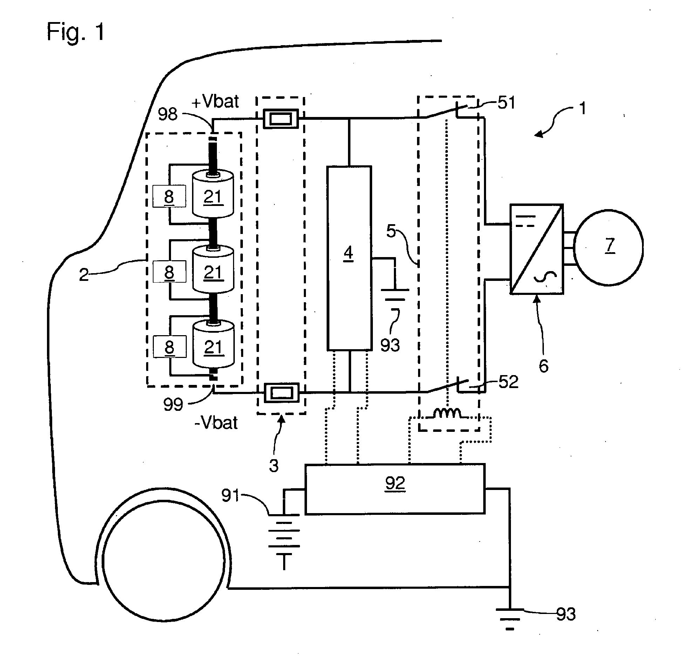

La figure 1 illustre un exemple de véhicule 1 mettant en oeuvre un mode de réalisation de l'invention. Le véhicule 1 est un véhicule électrique comprenant de façon connue en soi une batterie 2 incluant des modules ou éléments 21 contenant des accumulateurs électrochimiques connectés en série, par exemple du type lithium-ion phosphate de Fer (LiFePO4). La batterie 2 comprend ainsi une pluralité d'étages d'accumulateurs connectés en série, chaque étage incluant plusieurs accumulateurs connectés en parallèle. La batterie 2 comprend un grand nombre d'accumulateurs connectés en série, typiquement entre 40 et 150 accumulateurs en fonction de la tension nécessaire et du type d'accumulateurs utilisé. La tension aux bornes de la batterie 2 chargée est typiquement de l'ordre de 400 V. La batterie 2 applique une tension +Vbat sur une première borne 98, et une tension -Vbat sur une deuxième borne 99. Les modules 21 sont connectés en série par l'intermédiaire de connexions électriques de puissance. Les bornes de la batterie 2 sont connectées à une interface continu d'un onduleur 6. Un moteur électrique 7 est connecté sur une interface alternatif de l'onduleur 6.

La connexion entre les bornes de la batterie 2 et l'interface continu de l'onduleur 6 est réalisée par l'intermédiaire d'un bus haute tension muni d'un circuit de protection 3 et par l'intermédiaire d'un circuit d'accouplement de puissance 5. Le circuit de protection 3 peut comprendre de façon connue en soi des fusibles configurés pour ouvrir la connexion lors d'un court-circuit. Le circuit d'accouplement de puissance 5 comprend des interrupteurs 51 et 52 permettant de connecter/déconnecter sélectivement les bornes de la batterie 2 à l'interface continu de l'onduleur 6. L'ouverture/fermeture des interrupteurs 51 et 52 est commandée par un circuit de commande 92, typiquement un calculateur de supervision du fonctionnement de la batterie 2. Le circuit de commande 92 est typiquement alimenté par l'intermédiaire d'une batterie 91 d'alimentation du réseau de bord du véhicule 1, présentant un niveau de tension très inférieur à celui de la batterie 2. Le circuit de commande 92 est typiquement connecté à la masse mécanique 93, incluant le châssis et la carrosserie métalliques du véhicule 1.

Un dispositif de détection d'un défaut d'isolement 4 est connecté aux bornes de la batterie 2 et à la masse mécanique 93. Le dispositif de détection 4 comporte des bornes d'entrée sur lesquelles sont appliquées respectivement les tensions +Vbat et -Vbat par l'intermédiaire du bus haute tension. Le dispositif 4 est configuré pour détecter l'apparition d'un défaut d'isolement entre la batterie 2 et la masse mécanique 93.

Un module 21 correspond à une unité manipulable comprenant plusieurs accumulateurs 22 connectés en parallèle et/ou en série. Chaque module 21 comporte un dispositif de sécurisation 8 respectif. Un module 21 peut constituer un ou plusieurs étages en série de la batterie.

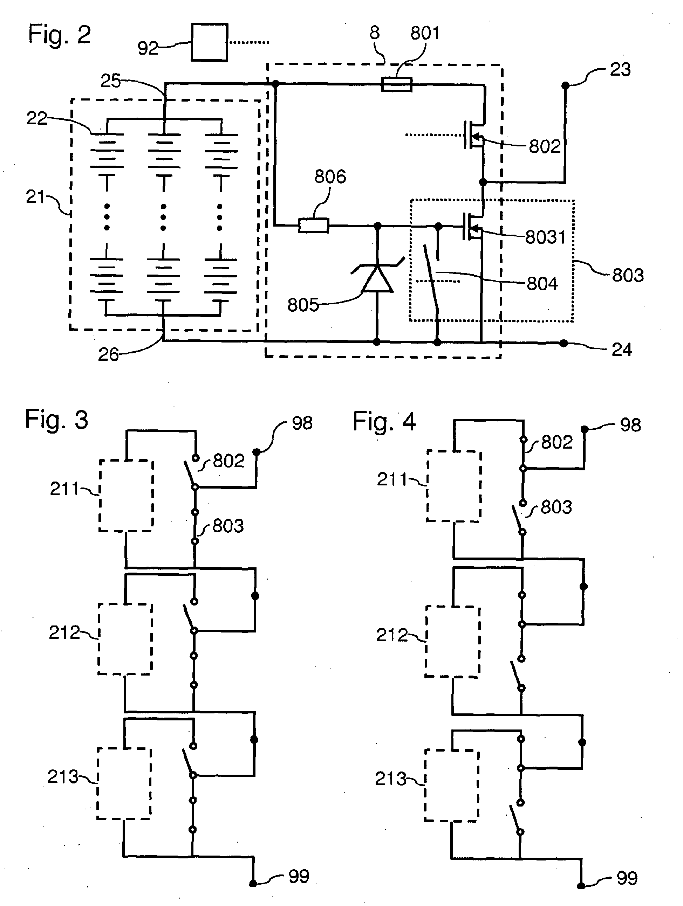

La figure 2 est un schéma électrique d'un dispositif de sécurisation 8 selon un premier mode de réalisation, accolé à un module 21 de la batterie 2. Le module 21 comprend plusieurs étages connectés en série, chaque étage comprenant plusieurs accumulateurs 22 connectés en parallèle. Le dispositif de sécurisation 8 est connecté au module 21 par l'intermédiaire de premier et deuxième pôles 25 et 26, entre lesquels des accumulateurs appliquent une différence de potentiel d'alimentation. Le module 21 comporte par ailleurs des première et deuxième bornes de sortie de puissance 23 et 24 destinées à être connectées à des modules en série ou à une des bornes 98 ou 99 de la batterie 2.

Le dispositif de sécurisation 8 comprend un premier interrupteur 803 et un deuxième interrupteur 802. Les interrupteurs 802 et 803 sont connectés en série entre les pôles 25 et 26. L'interrupteur 803 est configuré pour être normalement fermé, l'interrupteur 802 étant configuré pour être normalement ouvert. L'interrupteur 802 est configuré pour isoler/connecter sélectivement le pôle 25 et la borne 23. L'interrupteur 803 est configuré pour isoler/connecter sélectivement la borne 23 et la borne 24. La borne 24 est connectée au pôle 26. La fermeture de l'interrupteur 802 est commandée par le circuit de commande 92. En l'absence de signal de commande appliqué par le circuit de commande 92, l'interrupteur 802 est maintenu ouvert. En l'absence de signal de commande appliqué par le circuit de commande 92, l'interrupteur 803 est maintenu fermé. Avantageusement, le dispositif de sécurisation 8 comprend un disjoncteur 801, par exemple mis en oeuvre sous la forme d'un fusible. Le disjoncteur 801 est connecté entre le pôle 25 et le transistor 802.

En l'occurrence, l'interrupteur 802 est formé du transistor MOSFET 802 et l'interrupteur 803 inclut un transistor 8031 de type MOSFET, ces transistors MOSFET pouvant aisément être dimensionnés de façon appropriée à un coût relativement réduit. Les transistors 802 et 8031 illustrés sont de type MOS canal N. La source du transistor 802 est connectée à la borne 23, le drain est connecté au pôle 25 par l'intermédiaire du fusible 801, et sa grille est connectée au circuit de commande 92. La source du transistor 8031 est connectée à la borne 24, le drain est connecté à la borne 23, et sa grille est connectée au pôle 25 par l'intermédiaire d'une résistance de polarisation 806. L'ouverture du transistor 8031 est commandée par le circuit de commande 92. À cet effet, l'interrupteur 803 inclut un interrupteur 804 connecté entre la grille du transistor 8031 et la borne 24. La commande de l'interrupteur 804 forme la commande de l'interrupteur normalement fermé 803. La fermeture de l'interrupteur 804 abaisse le potentiel de la grille du transistor 8031 au potentiel de la borne 24, ce qui induit le blocage du transistor 8031. L'ouverture de l'interrupteur 804 induit une différence de potentiel entre la grille du transistor 8031 et la borne 24, ce qui rend le transistor 8031 passant. La fermeture du transistor 8031 est maintenue par défaut par une tension appliquée par les accumulateurs électrochimiques 22. Ainsi, la présence normale d'une tension entre les pôles 25 et 26 maintient le transistor 8031 fermé eh l'absence de commande sur l'interrupteur 804. Ainsi, la combinaison du transistor 8031 et de l'interrupteur 804 forme un interrupteur normalement fermé. En effet, en l'absence de commande de l'interrupteur 804, l'état par défaut de l'interrupteur 803 est bien fermé. Le circuit de sécurisation 8 comprend en outre avantageusement une diode Zener de protection 805 connectée entre la grille du transistor 8031 et la borne 24. La diode Zener 805 s'avère particulièrement avantageuse pour réguler (par exemple avec une tension Zener de l'ordre de 15V) la tension sur la grille du transistor 8031 en présence d'une différence de potentiel importante aux bornes du module 21.

Différents modes de fonctionnement des dispositifs de sécurisation 8 sont illustrés en référence aux figures 3 à 5. La batterie 2 comprend trois modules 211, 212 et 213 connectés en série.

À la figure 3, le véhicule 1 est à l'arrêt ou la batterie 2 est stockée hors du véhicule. Le circuit de commande 92 est alors soit déconnecté de la batterie 2, soit il est configuré pour n'appliquer aucun signal de commande sur les interrupteurs 802 et 804. Ainsi, le circuit de commande 92 est configuré pour maintenir simultanément l'interrupteur 802 ouvert et l'interrupteur 803 fermé. Dans cette configuration, les bornes de chacun des modules 211 à 213 sont connectées à un même potentiel. Ainsi, la différence de potentiel entre les bornes 98 et 99 de la batterie est nulle. Le transistor 8031 se comporte comme un condensateur entre grille et source et présente ainsi une consommation électrique sensiblement nulle.

Ainsi, la batterie 2 présente un état stable dans lequel la tension à ses bornes 98 et 99 est nulle, ce qui évite tout risque d'électrocution pour un manipulateur. De même, le processus de fabrication de la batterie 2 est facilité, puisque les précautions à prendre par le personnel assurant son montage sont réduits. En outre, la batterie 2 se place automatiquement dans un mode de fonctionnement sécurisé, par exemple lors d'une défaillance du circuit de commande 92, par exemple due à une immersion. On évite également la formation accidentelle d'un arc électrique entre les bornes durant le stockage du module. L'ouverture des interrupteurs 802 permet de maintenir la charge de la batterie 2 en évitant de créer un court-circuit entre les pôles d'un module.

À la figure 4, le véhicule 1 est en fonctionnement, et la batterie 2 alimente le moteur électrique 7 du véhicule.

Dans chaque module, le circuit de commande 92 maintient l'interrupteur 804 fermé, de sorte que le transistor 8031 est bloqué et l'interrupteur 803 est donc ouvert. Le circuit de commande 92 maintient simultanément l'interrupteur 802 passant. La borne 23 est ainsi connectée au pôle 25, de sorte que la différence de potentiel générée par les accumulateurs électrochimiques 21 est appliquée entre les bornes 23 et 24.

Dans cette configuration, les modules 21 sont connectés en série de sorte que les tensions cumulées des modules 211 à 213 sont appliquées entre les bornes de sortie 98 et 99. L'onduleur 6 peut ainsi être alimenté à une tension appropriée.

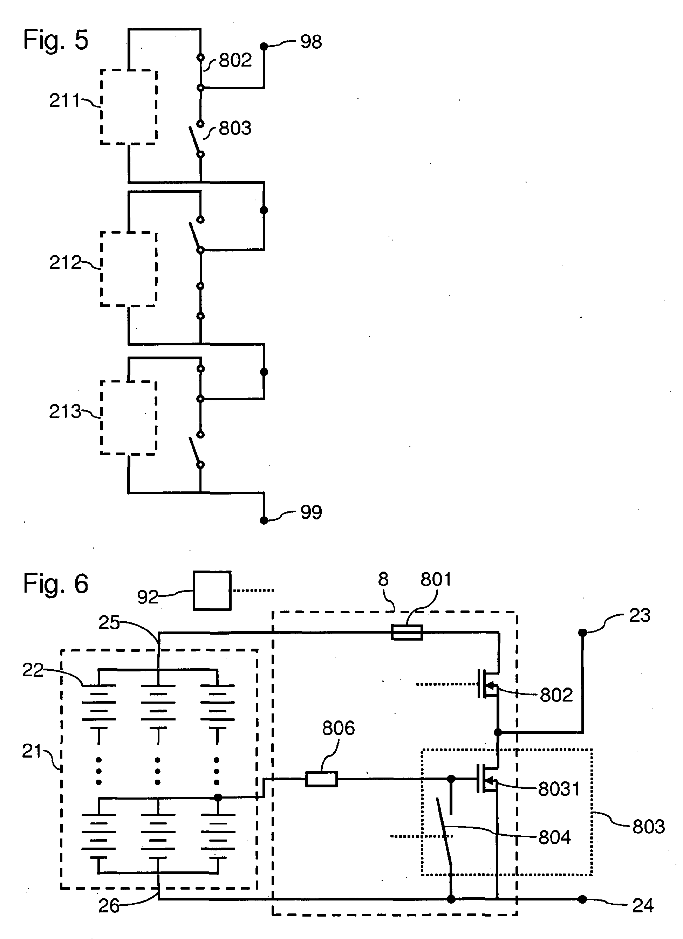

À la figure 5, le véhicule 1 est en fonctionnement et le module 212 est défaillant. Le module 212 se met en court-circuit dans l'exemple, l'interrupteur 802 s'ouvre et l'interrupteur 803 se ferme. Les bornes 23 et 24 sont ainsi mises en court-circuit. Le courant série de la batterie 2 traverse alors l'interrupteur 803 du module 212 pour permettre une continuité de service. Les modules 211 et 213 continuent à fonctionner normalement pour apporter leur contribution à la différence de potentiel entre les bornes 98 et 99.

La commutation du transistor 8031 vers l'état bloqué est avantageusement antérieure à la commutation du transistor 802 vers l'état passant, de façon à éviter un court-circuit transitoire entre le pôle 25 et la borne 24. Ainsi une courte durée de découvrement s'avère avantageuse. De façon similaire, la commutation du transistor 802 vers l'état bloqué est avantageusement antérieure à la commutation du transistor 8031 vers l'état passant, de façon à éviter un court-circuit transitoire entre le pôle 25 et la borne 24.

Afin de limiter la consommation du circuit de sécurisation 8 durant le fonctionnement du véhicule 1, la résistance 806 présente avantageusement une valeur suffisamment élevée pour obtenir un courant la traversant de l'ordre du micro ampère, afin de ne pas altérer l'autonomie de la batterie 2. La valeur de cette résistance pourra par exemple être comprise entre 1 et 10MΩ.

Le fusible 801 présente avantageusement une valeur l²t inférieure à la valeur l²t des liaisons internes du transistor 8031. Un tel dimensionnement du fusible 801 permet de garantir la continuité de service de la batterie 2, même lors d'une défaillance du transistor 802. Dans l'hypothèse où le transistor 802 se mettrait accidentellement en court-circuit, le courant traversant le transistor 802 induit l'ouverture du fusible 801, si possible avant l'altération du transistor 8031, sinon, en acceptant que celui-ci soit détérioré suite à la surchauffe du semiconducteur, ce qui l'amène dans un état conducteur permanent (court-circuit) Ainsi, d'une part le pôle 25 est isolé de la borne 23, et la borne 23 peut-être maintenue au potentiel de la borne 24. Quoi qu'il en soit, le fusible 801 permet d'éviter une détérioration du transistor 803 allant jusqu'à placer celui-ci en circuit ouvert.

La figure 6 est un schéma électrique d'un dispositif de sécurisation 8 selon un deuxième mode de réalisation, accolé à un module 21 de la batterie 2. Ce mode de réalisation apporte une solution au très faible courant de fuite traversant la diode Zener 805 du premier mode de réalisation durant les périodes d'inactivité ou de stockage. Ce deuxième mode de réalisation est dépourvu de diode Zener connectée entre la grille du transistor 8031 et la borne 24. Par ailleurs, la résistance 806 est ici connectée entre la grille du transistor 8031 et un point intermédiaire entre les accumulateurs en série du module 21. Ainsi, on peut appliquer une tension sur la grille du transistor 8031 (inférieure à la tension entre les pôles 25 et 26) compatible avec le niveau de tension de seuil de cette grille, tout en maintenant le transistor 8031 bloqué.

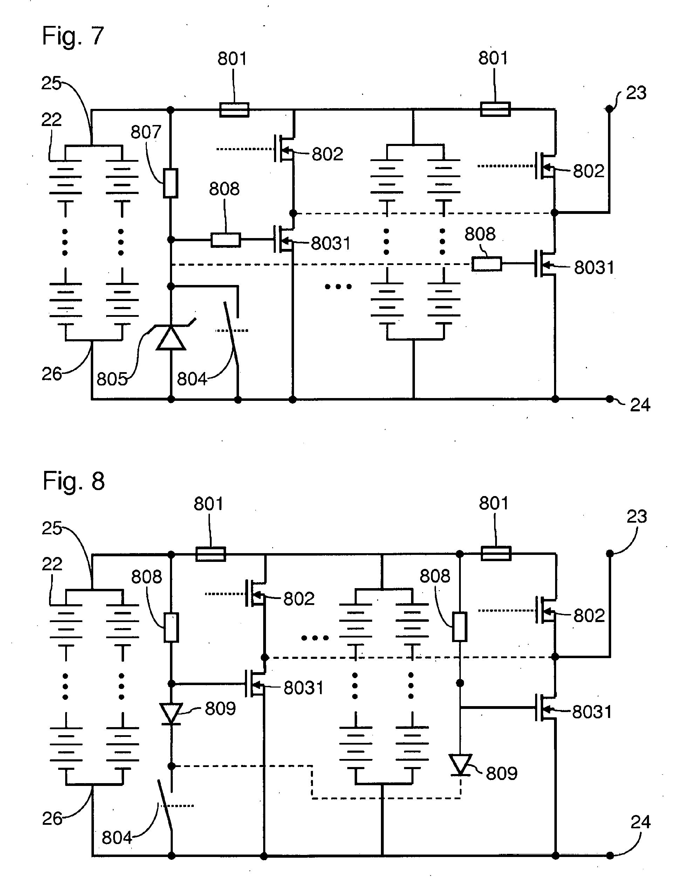

La figure 7 est un schéma électrique d'un dispositif de sécurisation selon une première variante d'un troisième mode de réalisation, intégré dans un module de la batterie 2. Le module comprend plusieurs branches connectées en parallèle (2 dans l'exemple), chaque branche comportant plusieurs accumulateurs 22 connectés en série. Plusieurs groupes de branches comportent des dispositifs de sécurisation respectifs. Chaque groupe de branches comporte un dispositif de sécurisation réalisé sous forme de circuit intégré local.

Chaque dispositif de sécurisation comporte un fusible 801, un transistor 802, un transistor 8031 et une résistance 808. Le fusible 801, le transistor 802 et le transistor 8031 sont connectés en série entre la borne 24 et le pôle 25 du groupe de branches respectif. La résistance 808 est connectée entre la grille du transistor 803 et un noeud commun aux différentes résistances 808. La source des transistors 802 et le drain des transistors 8031 sont connectés à la borne 23.

Les différents dispositifs de sécurisation partagent :
- une résistance commune 807 connectée entre le pôle 25 et le noeud commun aux résistances 808 ;
- l'interrupteur 804, connecté entre la borne 24 et le noeud commun aux résistances 808 ;
- la diode Zener 805 connectée entre la borne 24 et le noeud commun aux résistances 808.

Ce mode de réalisation permet en pratique de répartir l'intensité débitée par le module dans plusieurs transistors 802. Le dégagement de chaleur par effet joule est ainsi réparti et facilite le refroidissement des dispositifs de sécurisation. On peut ainsi utiliser des transistors 802 avec des dimensionnements relativement usuels, en bénéficiant en outre d'une redondance pour la conduction du courant du module. Un tel circuit peut ainsi être réalisé à un coût relativement réduit tout en améliorant la continuité de service de la batterie 2. L'utilisation d'un interrupteur 804 commun aux différents dispositifs de sécurisation permet d'assurer une commutation simultanée de l'ensemble des transistors 8031 et de réduire globalement le coût du module. On peut bien entendu également utiliser des interrupteurs 804 dédiés à chacun des dispositifs de sécurisation.

La figure 8 est un schéma électrique d'un dispositif de sécurisation selon une deuxième variante du troisième mode de réalisation, intégré dans un module de la batterie 2. Le module comprend plusieurs branches connectées en parallèle (2 dans l'exemple), chaque branche comportant plusieurs accumulateurs 22 connectés en série.

Cette deuxième variante diffère de la première variante par l'utilisation d'une diode 809 pour chacun des dispositifs de sécurisation. Dans chaque dispositif de sécurisation, la diode 809 est connectée entre l'interrupteur 804 (noeud commun aux différentes diodes 809) et la grille du transistor 8031. Chaque dispositif de sécurisation comporte une résistance 808 connectée entre un pôle 25 et la grille du transistor 8031. Les diodes 809 peuvent par exemple être de type bipolaire ou de type Schottky. Les diodes 809 font office de fonction OU pour le blocage des transistors 8031 par l'interrupteur 804.

Dans le troisième mode de réalisation, le module 21 comprend un grand nombre d'accumulateurs 22 connectés en parallèle. Pour des raisons d'aménagement, on dispose un couple de transistors 802/8031 au niveau d'un groupe respectif de branches en parallèle. Une telle configuration permet également de favoriser l'équilibrage des courants entre les différents groupes de branches. Cependant, on peut également envisager de disposer l'ensemble des couples de transistors 802/8031 sur une même carte électronique.

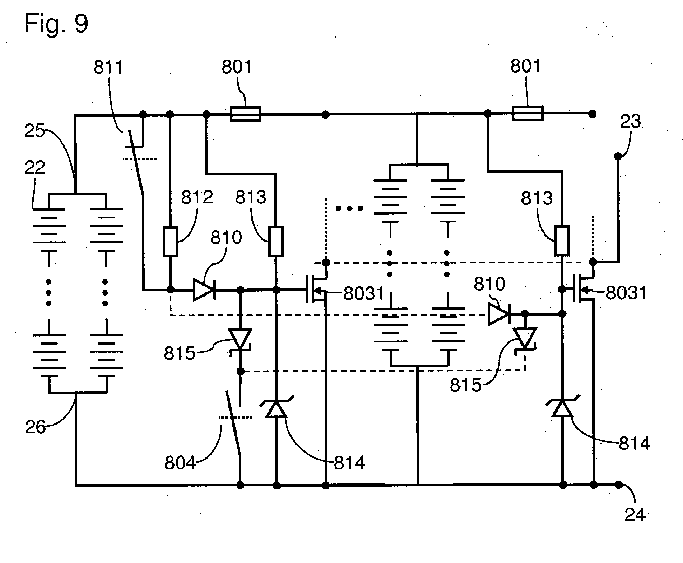

La figure 9 est un schéma électrique d'un quatrième mode de réalisation intégrant un circuit de détection de défaillance. Ce mode de réalisation comprend également des dispositifs de sécurisation intégrés dans des groupes respectifs de branches d'accumulateurs.

Chaque dispositif de sécurisation comporte un fusible 801, un transistor normalement ouvert (non illustré pour des raisons de lisibilité), un transistor 8031, une résistance 813, une diode 810, une diode 815, et une diode Zener 814. Le fusible 801, le transistor normalement ouvert et le transistor 8031 sont connectés en série entre la borne 24 et le pôle 25 du groupe de branches respectif. La résistance 813 est connectée entre la grille du transistor 8031 et le pôle 25. La source des transistors 802 et le drain des transistors 8031 sont connectés à la borne 23. La diode 810 est connectée entre la grille du transistor 8031 et un noeud commun aux autres diodes 810. La diode 815 est connectée à la grille du transistor 8031 et à un noeud commun aux autres diodes 815. La diode Zener 814 est connectée entre la borne 24 et la grille du transistor 8031.

Les différents dispositifs de sécurisation partagent :
- l'interrupteur 804, connecté entre la borne 24 et le noeud commun aux diodes 815 ;
- une résistance 812 connecté entre le 25 et le noeud commun aux diodes 810 ;
- un interrupteur 811 connecté entre le 25 et le noeud commun aux diodes 810. L'interrupteur 811 est commandé par le circuit de commande 92.

Le blocage du transistor 803 est réalisé par l'intermédiaire de la diode 815 (par exemple une diode Schottky) et d'une fermeture de l'interrupteur 804.

Une détection d'une défaillance des transistors 8031 permet avantageusement de rendre également passants les transistors 8031 des autres dispositifs de sécurisation, et ne pas fermer les MOS normalement ouverts 802. Le module est alors utilisé pour transmettre le courant généré par le reste de la batterie 2, les bornes 23 et 24 du module défaillant étant alors en court-circuit, comme décrit en référence à la figure 5.

Les diodes 810 et la résistance 812 forment une fonction ET. Pour que le noeud commun aux diodes 810 passe à un niveau logique bas, il suffit que l'une quelconque des tensions de grille de transistors 8031 devienne sensiblement nulle. La destruction d'un transistor 8031 se caractérise par la détérioration de l'oxyde de grille induisant une tension de grille passant sensiblement à zéro. La grille du transistor 8031 défectueux laisse alors passer le courant de la résistance 813 respective. La tension au niveau du noeud commun aux diodes 810 est alors sensiblement nulle. Le circuit de commande 92 peut alors avantageusement suivre le niveau de la tension du noeud commun aux diodes 810 pour déterminer si un des transistors 8031 est défaillant.

Pour éviter d'altérer l'autonomie du module du fait de résistances de fuite, les résistances 812 et 813 présentent avantageusement des valeurs appropriées. Les résistances 812 et 813 pourront par exemple présenter des valeurs comprises entre 1 et 10 MΩ, pour limiter le courant de fuite à une valeur de l'ordre de quelques microampères.

Les diodes 810 peuvent également avantageusement être utilisées pour appliquer une commande à courant accru (en procédant à la fermeture de l'interrupteur 811) et ainsi accroître la vitesse de fermeture du transistor 8031.

Pour protéger les diodes 815 en cas de défaillance d'un transistor 8031 induisant une tension de grille élevée, une résistance est avantageusement connectée en série avec une diode 815 respective.

Les circuits de sécurisation 8 peuvent être utilisés pour mettre en oeuvre des fonctions supplémentaires au niveau de la batterie 2. Le circuit de commande 92 pourra ainsi présenter une configuration adéquate pour mettre en oeuvre ces différentes fonctions.

Le circuit de commande 92 peut ainsi commander l'application d'une tension aux bornes de la batterie 2 inférieure à la tension nominale, en fonction des conditions de fonctionnement du véhicule. Dans un tel cas, un ou plusieurs modules pourront être court-circuités, en fermant leurs transistors 8031 et en ouvrant leurs transistors 802.

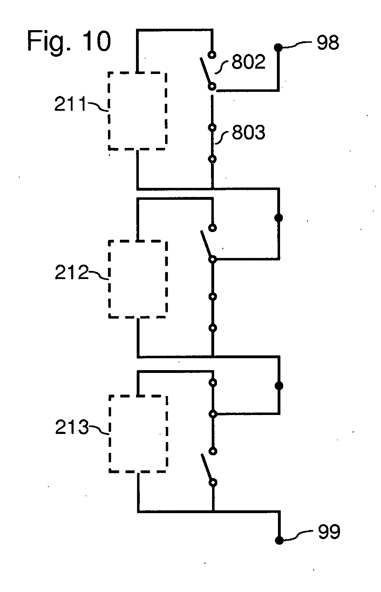

L'invention permet également avantageusement d'utiliser les dispositifs de sécurisation 8 pour réaliser une précharge du condensateur de découplage de l'onduleur 6. Ainsi, on peut appliquer progressivement la tension de la batterie 2 aux bornes de sortie 98 et 99 en connectant successivement la tension des différents modules. La batterie 2 applique ainsi des incréments de tension aux bornes de sortie 98 et 99, ces incréments correspondant à la tension nominale d'un module. La figure 10 illustre le début de la précharge, seule la tension du module 213 étant appliquée entre les bornes de sortie 98 et 99.

Les circuits de sécurisation 8 peuvent également être utilisés durant la charge de la batterie 2, pour isoler du chargeur les modules ayant atteint précocement leur charge nominale. De façon similaire, les circuits de sécurisation 8 peuvent être utilisés en fin de décharge de la batterie 2, pour isoler un module par rapport à l'onduleur 6 lorsque ce module a atteint précocement sa fin de décharge.

Avantageusement, le module 21 peut être verni ou revêtu d'isolant électrique pour limiter les risques en cas d'immersion. Le vernis ou le revêtement isolant peut être appliqué sur toutes les surfaces conductrices restant sous tension (accumulateurs 22 à l'intérieur du module 21), ou sur le circuit électronique intégré au module. On prévient ainsi des dysfonctionnements dus à une destruction du circuit électronique, ou une génération d'oxygène par électrolyse de l'eau.

## Revendications

1. Élément de batterie (21), comprenant :
- plusieurs accumulateurs électrochimiques (22) appliquant une différence de potentiel entre des premier et deuxième pôles (25,26) ;
- deux bornes de sortie de puissance (23,24) ;
**caractérisé en ce qu'**il comprend en outre :
- un dispositif de sécurisation (8) comprenant des premier et deuxième interrupteurs (802,803) connectés en série entre les premier et deuxième pôles, le premier interrupteur étant un interrupteur normalement fermé et le deuxième interrupteur étant un interrupteur normalement ouvert, l'interrupteur normalement ouvert étant configuré pour isoler/connecter sélectivement le premier pôle (25) et la première borne (23), l'interrupteur normalement fermé étant configuré pour isoler/connecter sélectivement les première (23) et deuxième (24) bornes, le signal de commande de l'interrupteur normalement fermé étant une tension appliquée par lesdits accumulateurs électrochimiques.

2. Élément de batterie (21) selon la revendication 1, comprenant un circuit de commande (92) configuré pour maintenir simultanément ouvert l'interrupteur normalement fermé (802), et fermé l'interrupteur normalement ouvert (803).

3. Élément de batterie (21) selon la revendication 1 ou 2, dans lequel lesdits interrupteurs normalement ouvert et normalement fermé (802,803) incluent des transistors de type MOSFET, la grille du transistor de l'interrupteur normalement fermé étant connectée à la tension d'un desdits accumulateurs électrochimiques supérieure à la tension du deuxième pôle, et la source du transistor de l'interrupteur normalement fermé étant connectée au deuxième pôle (26).

4. Élément de batterie (21) selon les revendications 2 et 3, dans lequel la grille du transistor MOSFET de l'interrupteur normalement fermé est connectée à un accumulateur électrochimique par l'intermédiaire d'une résistance, et l'interrupteur normalement fermé incluant un interrupteur (804) commandé par le circuit de commande (92) et connecté entre la grille du transistor MOSFET de l'interrupteur normalement fermé et le deuxième pôle (26).

5. Elément de batterie selon l'une quelconque des revendications précédentes, dans lequel ladite résistance connecte la grille du transistor MOSFET de l'interrupteur normalement fermé à un noeud de connexion entre deux desdits accumulateurs connectés en série.

6. Elément de batterie (21) selon la revendication 3 ou 4, comprenant un fusible dont la valeur I²t est inférieure à la valeur I²t des liaisons internes du transistor MOSFET de l'interrupteur normalement fermé.

7. Elément de batterie selon l'une quelconque des revendications précédentes, dans lequel le dispositif de sécurisation (8) comprend des troisième et quatrième interrupteurs (802,803) connectés en série entre les premier et deuxième pôles, le troisième interrupteur étant un interrupteur normalement fermé et le quatrième interrupteur étant un interrupteur normalement ouvert, le quatrième interrupteur étant configuré pour isoler/connecter sélectivement le premier pôle et la première borne, le troisième interrupteur étant configuré pour isoler/connecter sélectivement les première et deuxième bornes, le signal de commande du troisième interrupteur étant une tension appliquée par lesdits accumulateurs électrochimiques.

8. Elément de batterie selon les revendications 3 et 7, dans lequel lesdits troisième et quatrième interrupteurs incluent des transistors de type MOSFET, la grille du troisième transistor étant connectée à la tension d'un desdits accumulateurs électrochimiques supérieure à la tension du deuxième pôle, et la source du quatrième transistor étant connectée au deuxième pôle (26)

9. Elément de batterie selon les revendications 4 et 8, dans lequel la fermeture d'un même interrupteur (804) induit l'ouverture desdits transistors de l'interrupteur normalement fermé.

10. Elément de batterie selon la revendication 8 ou 9, dans lequel le dispositif de sécurisation comprend un circuit de détection de détérioration d'un desdits transistors des interrupteurs normalement fermés, le circuit de détection comprenant :
- une résistance connectée entre le premier pôle et un noeud de détection ;
- une première diode dont l'anode est connectée audit noeud de détection et dont la cathode est connectée à la grille du transistor du premier interrupteur ;
- une deuxième diode dont l'anode est connectée audit noeud de détection et dont la cathode est connectée à la grille du troisième transistor ;
- un circuit de mesure de la tension du noeud de détection.

11. Batterie comprenant plusieurs éléments de batterie selon l'une quelconque des revendications précédentes connectés en série, la somme des tensions nominales desdits éléments de batterie étant supérieure à 100V.

12. Batterie selon la revendication 11, comprenant des éléments de batterie selon la revendication 2, le circuit de commande (92) étant configuré pour maintenir simultanément ouvert l'interrupteur normalement fermé (802) de chaque élément de batterie, et fermé l'interrupteur normalement ouvert (803) de chaque élément de batterie.

13. Batterie selon la revendication 12, dans lequel le circuit de commande est configuré pour activer séquentiellement l'application de la tension nominale de plusieurs éléments de batterie à leurs bornes de sortie de puissance.

14. Batterie selon la revendication 12 ou 13, dans lequel le circuit de commande est configuré pour :
- détecter qu'un élément de batterie a atteint une limite de charge ;
- maintenir simultanément fermé l'interrupteur normalement fermé et ouvert l'interrupteur normalement ouvert de l'élément de batterie détecté ;
- maintenir simultanément ouvert l'interrupteur normalement fermé et fermé l'interrupteur normalement ouvert d'un autre élément de batterie.

15. Véhicule automobile (1) comprenant :
- un moteur électrique (7) ;
- une batterie (2) selon l'une quelconque des revendications 11 à 14 alimentant le moteur électrique.

## Patentansprüche

1. Batteriezelle (21), umfassend:
- mehrere elektrochemische Akkumulatoren (22), die zwischen einem ersten und einem zweiten Pol (25, 26) eine Spannungsdifferenz anlegen;
- zwei Ausgangsleistungsanschlüsse (23, 24);
**dadurch gekennzeichnet, dass** sie ferner
- eine Sicherungsvorrichtung (8) umfasst, die einen ersten und einen zweiten Schalter (802, 803) umfasst, welche zwischen dem ersten und dem zweiten Pol in Reihe geschaltet sind, wobei der erste Schalter ein normalerweise geschlossener Schalter ist und der zweite Schalter ein normalerweise geöffneter Schalter ist, wobei der normalerweise geöffnete Schalter dazu konfiguriert ist, den ersten Pol (25) und den ersten Anschluss (23) selektiv zu isolieren/verbinden, wobei der normalerweise geschlossene Schalter dazu konfiguriert ist, den ersten (23) und den zweiten (24) Anschluss selektiv zu isolieren/verbinden, wobei das Steuersignal des normalerweise geschlossenen Schalters eine durch die elektrochemischen Akkumulatoren angelegte Spannung ist.

2. Batteriezelle (21) nach Anspruch 1, die eine Steuerschaltung (92) umfasst, die dazu konfiguriert ist, gleichzeitig den normalerweise geschlossenen Schalter (802) geöffnet und den normalerweise geöffneten Schalter (803) geschlossen zu halten.

3. Batteriezelle (21) nach Anspruch 1 oder 2, wobei der normalerweise geöffnete und der normalerweise geschlossene Schalter (802, 803) MOSFET-Transistoreren enthalten, wobei das Gate des Transistors des normalerweise geschlossenen Schalters mit der Spannung eines der elektrochemischen Akkumulatoren, die größer ist als die Spannung des zweiten Pols, verbunden ist und die Source des Transistors des normalerweise geschlossenen Schalters mit dem zweiten Pol (26) verbunden ist.

4. Batteriezelle (21) nach den Ansprüchen 2 und 3, wobei das Gate des MOSFET-Transistors des normalerweise geschlossenen Schalters über einen Widerstand mit einem elektrochemischen Akkumulator verbunden ist und der normalerweise geschlossene Schalter einen Schalter (804) enthält, der durch die Steuerschaltung (92) gesteuert wird und zwischen dem Gate des MOSFET-Transistors des normalerweise geschlossenen Schalters und dem zweiten Pol (26) verbunden ist.

5. Batteriezelle nach einem der vorhergehenden Ansprüche, wobei der Widerstand das Gate des MOSFET-Transistors des normalerweise geschlossenen Schalters mit einem Verbindungsknoten zwischen zwei der in Reihe geschalteten Akkumulatoren verbindet.

6. Batteriezelle (21) nach Anspruch 3 oder 4, die eine Sicherung umfasst, deren I²t-Wert kleiner ist als der I²t-Wert der inneren Verbindungen des MOSFET-Transistors des normalerweise geschlossenen Schalters.

7. Batteriezelle nach einem der vorhergehenden Ansprüche, wobei die Sicherungsvorrichtung (8) einen dritten und einen vierten Schalter (802, 803) umfasst, die zwischen dem ersten und dem zweiten Pol in Reihe geschaltet sind, wobei der dritte Schalter ein normalerweise geschlossener Schalter ist und der vierte Schalter ein normalerweise geöffneter Schalter ist, wobei der vierte Schalter dazu konfiguriert ist, den ersten Pol und den ersten Anschluss selektiv zu isolieren/verbinden, wobei der dritte Schalter dazu konfiguriert ist, den ersten und den zweiten Anschluss selektiv zu isolieren/verbinden, wobei das Steuersignal des dritten Schalters eine durch die elektrochemischen Akkumulatoren angelegte Spannung ist.

8. Batteriezelle nach den Ansprüchen 3 und 7, wobei der dritte und der vierte Schalter MOSFET-Transistoren enthalten, wobei das Gate des dritten Transistors mit der Spannung eines der elektrochemischen Akkumulatoren, die größer ist als die Spannung des zweiten Pols, verbunden ist und die Source des vierten Transistors mit dem zweiten Pol (26) verbunden ist.

9. Batteriezelle nach den Ansprüchen 4 und 8, wobei das Schließen eines gleichen Schalters (804) das Öffnen der Transistoren des normalerweise geschlossenen Schalters bewirkt.

10. Batteriezelle nach Anspruch 8 oder 9, wobei die Sicherungsvorrichtung eine Schaltung zur Erkennung einer Beeinträchtigung eines der Transistoren der normalerweise geschlossenen Schalter umfasst, wobei die Erkennungsschaltung Folgendes umfasst:
- einen zwischen dem ersten Pol und dem Erkennungsknoten verbundenen Widerstand;
- eine erste Diode, deren Anode mit dem Erkennungsknoten verbunden ist und deren Kathode mit dem Gate des Transistors des ersten Schalters verbunden ist;
- eine zweite Diode, deren Anode mit dem Erkennungsknoten verbunden ist und deren Kathode mit dem Gate des dritten Transistors verbunden ist;
- eine Schaltung zum Messen der Spannung des Erkennungsknotens.

11. Batterie, die mehrere Batteriezellen nach einem der vorhergehenden Ansprüche umfasst, die in Reihe geschaltet sind, wobei die Summe der Nennspannungen der Batteriezellen größer als 100V ist.

12. Batterie nach Anspruch 11, die Batteriezellen nach Anspruch 2 umfasst, wobei die Steuerschaltung (92) dazu konfiguriert ist, gleichzeitig den normalerweise geschlossenen Schalter (802) jeder Batteriezelle geöffnet und den normalerweise geöffneten Schalter (803) jeder Batteriezelle geschlossen zu halten.

13. Batterie nach Anspruch 12, wobei die Steuerschaltung dazu konfiguriert ist, nacheinander das Anlegen der Nennspannung von mehreren Batteriezellen an ihre Ausgangsleistungsanschlüsse zu aktivieren.

14. Batterie nach Anspruch 12 oder 13, wobei die Steuerschaltung dazu konfiguriert ist:
- zu detektieren, ob eine Batteriezelle eine Ladungsgrenze erreicht hat;
- gleichzeitig den normalerweise geschlossenen Schalter der detektierten Batteriezelle geschlossen und den normalerweise geöffneten Schalter der detektierten Batteriezelle geöffnet zu halten,
- gleichzeitig den normalerweise geschlossenen Schalter einer anderen Batteriezelle geöffnet und den normalerweise geöffneten Schalter einer anderen Batteriezelle geschlossen zu halten.

15. Kraftfahrzeug (1), umfassend:
- einen Elektromotor (7);
- eine Batterie (2) nach einem der Ansprüche 11 bis 14, die den Elektromotor versorgt.

## Claims

1. Battery element (21), comprising:
- a plurality of electrochemical accumulators (22) applying a potential difference between first and second poles (25, 26);
- two power output terminals (23, 34); **characterized in that** it further comprises:
- a securing device (8) comprising first and second switches (802, 803) connected in series between the first and second poles, the first switch being a normally-closed switch and the second switch being a normally-open switch, the normally-open switch being configured to selectively isolate/connect the first pole (25) and the first terminal (23), the normally-closed switch being configured to selectively isolate/connect the first (23) and second (24) terminals, the control signal of the normally-closed switch being a voltage applied by said electrochemical accumulators.

2. Battery element (21) according to Claim 1, comprising a control circuit (92) configured to simultaneously keep the normally-closed switch (802) open and the normally-open switch (803) closed.

3. Battery element (21) according to Claim 1 or 2, in which said normally-open and normally-closed switches (802, 803) include transistors of MOSFET type, the gate of the transistor of the normally-closed switch being connected to the voltage of one of said electrochemical accumulators greater than the voltage of the second pole, and the source of the transistor of the normally-closed switch being connected to the second pole (26).

4. Battery element (21) according to Claims 2 and 3, in which the gate of the MOSFET transistor of the normally-closed switch is connected to an electrochemical accumulator via a resistor, and the normally-closed switch including a switch (804) controlled by the control circuit (92) is connected between the gate of the MOSFET transistor of the normally-closed switch and the second pole (26).

5. Battery element according to any one of the preceding claims, in which said resistor connects the gate of the MOSFET transistor of the normally-closed switch to a connection node between two of said accumulators connected in series.

6. Battery element (21) according to Claim 3 or 4, comprising a fuse whose value l²t is less than the value l²t of the internal links of the MOSFET transistor of the normally-closed switch.

7. Battery element according to any one of the preceding claims, in which the securing device (8) comprises third and fourth switches (802, 803) connected in series between the first and second poles, the third switch being a normally-closed switch and the fourth switch being a normally-open switch, the fourth switch being configured to selectively isolate/connect the first pole and the first terminal, the third switch being configured to selectively isolate/connect the first and second terminals, the control signal of the third switch being a voltage applied by said electrochemical accumulators.

8. Battery element according to Claims 3 and 7, in which said third and fourth switches include transistors of MOSFET type, the gate of the third transistor being connected to the voltage of one of said electrochemical accumulators greater than the voltage of the second pole, and the source of the fourth transistor being connected to the second pole (26).

9. Battery element according to Claims 4 and 8, in which the closure of a same switch (804) induces the opening of said transistors of the normally-closed switch.

10. Battery element according to Claim 8 or 9, in which the securing device comprises a circuit for detecting deterioration of one of said transistors of the normally-closed switches, the detection circuit comprising:
- a resistor connected between the first pole and a detection node;
- a first diode whose anode is connected to said detection node and whose cathode is connected to the gate of the transistor of the first switch;
- a second diode whose anode is connected to said detection node and whose cathode is connected to the gate of the third transistor;
- a circuit for measuring the voltage of the detection node.

11. Battery comprising a plurality of battery elements according to any one of the preceding claims connected in series, the sum of the nominal voltages of said battery elements being greater than 100 V.

12. Battery according to Claim 11, comprising battery elements according to Claim 2, the control circuit (92) being configured to simultaneously keep the normally-closed switch (802) of each battery element open, and the normally-open switch (803) of each battery element closed.

13. Battery according to Claim 12, in which the control circuit is configured to sequentially activate the application of the nominal voltage of a plurality of battery elements to their power output terminals.

14. Battery according to Claim 12 or 13, in which the control circuit is configured to:
- detect that a battery element has reached a charge limit;
- simultaneously keep the normally-closed switch of the detected battery element closed and the normally-open switch of the detected battery element open;
- simultaneously keep the normally-closed switch of another battery element open and the normally-open switch of that other battery element closed.

15. Motor vehicle (1) comprising:
- an electric motor (7);
- a battery (2) according to any one of Claims 11 to 14 powering the electric motor.
